# EUROPEAN PATENT APPLICATION

(11) **EP 1 775 660 A1**
(43) Date of publication of application: **18.04.2007**
(21) Application number: 05749062.5
(22) Date of filing: 10.06.2005
(51) Int. Cl.: G06F 15/00, G05B 19/05, G06F 9/54

(54) **MUTUAL ACCESS METHOD OF DATA AND MUTUAL ACCESS SYSTEM OF DATA**

(30) Priority: 22.06.2004 JP 2004183404
(71) Applicant: Yokogawa Electric Corporation, Tokyo 180-8750 (JP)
(72) Inventor: SATO, Masahito, c/o YOKOGAWA ELECTRIC CORPORATION, Musashino-shi, Tokyo 1808750 (JP)
(74) Representative: Grünecker, Kinkeldey, Stockmair & Schwanhäusser Anwaltssozietät
(86) International application number: PCT/JP2005/010712
(87) International publication number: WO 2005/124571

(57) **Abstract**

A variable is defined by one engineering device. A tag name is assigned to the variable that the other device accesses, and a corresponding table of the tag name and the variable name is created. Further, a tag object is converted to a tag list in a format that can be interpreted by the other device, and the tag list is downloaded to the other device. The tag name of the access from the other device is converted to the variable name with reference to the corresponding table.

## Description

### Technical Field

The present invention relates to an interactive data access method and an interactive data access system of a plurality of devices in a system in which the plurality of devices is connected, in which one device can access data of the other device by using the same communication interface.

### Background Art

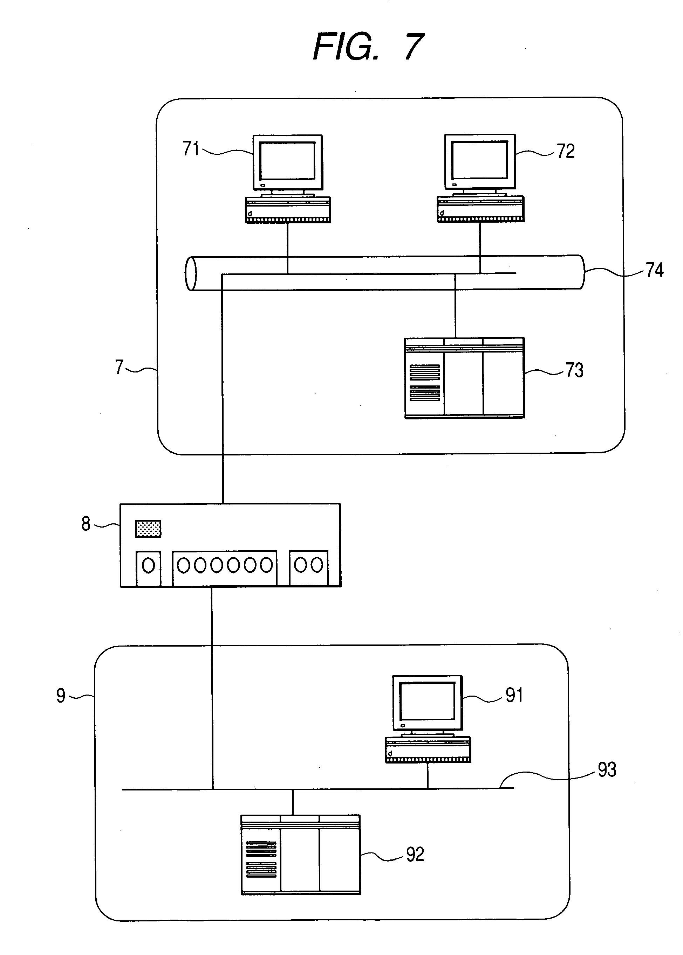

Fig 7 shows a structure of a system in which two systems of a distributed production control system and a safety system are connected together. The safety system is a system for handling a signal that does not vary during a steady state and is employed for an emergency shutdown device or a fire protection and extinguishment equipment, etc., required to assuredly operate when an abnormality is detected.

In Fig. 7, in a distributed production control system 7, a production engineering device 71, a production human interface 72 and a production controller 73 are connected by a production control communication bus 74. In a safety system 9, a safety engineering device 91 is connected to a safety controller 92 by a safety control communication bus 93. Further, the distributed production control system 7 and the safety system 9 are mutually connected via a gateway 8.

Data for safety control stored in the safety controller 92 is collected by the gateway 8 connected to the safety control communication bus 93 and stored. The gateway 8 transfers data collected in response to the request of the production controller 73 or the production human interface 72, to these devices via the production control communication bus 74.

Since a variable used in the distributed production control system 7 is defined by the production engineering device 71 and a variable used in the safety system 9 is defined by the safety engineering device 91, both variables differ in data formats. For instance; the variable defined as "X" by the safety engineering device 91 is requested by the name of "A" from the distributed production control system 7.

Therefore, when the distributed production control system 7 refers to the data of the safety system 9, and vice versa, the data needs to be converted mutually. To perform the conversion, a corresponding table for a mutual conversion is provided in the gateway 8 and the mutual conversion is performed by using this table. The corresponding table is created by the safety engineering device 91 and downloaded to the gateway 8.

JP-A-2001-290714 is referred to as a related art.

### Disclosure of the Invention

### Problems that the invention is to Solve

However, the system shown in Fig. 7 in which the distributed production control system and the safety system are is connected together has problems as described below.

According to the system in which the two systems are connected together by the gateway, when one system refers to the variable of the other system, a conversion is required in the gateway 8. Accordingly, responsiveness is deteriorated.

Further, engineering of the distributed production control system 7 needs to be carried out by the production engineering device 71, and engineering of the safety system 9 needs to be carried out by the safety engineering device 91, so that the engineering devices are not standardized.

Therefore, double engineering in which data is defined two times needs to be carried out. In this case, when although the data of one system is corrected, the data of the other system is forgotten to be corrected, there is a possibility that the gateway 8 may not normally operate.
It is an object of the present invention to provide an interactive data access method and an interactive data access system of a plurality of devices, in which double engineering does not occur and a correction is not forgotten by providing the same communication interface in two devices.

### Means for Solving the Problems

The present invention provides an interactive data access method of a plurality of devices, in which the plurality of devices connected via a network interactively accesses so as to set values to variables and read the values of the variables, the interactive data access method comprising:
creating a program to be performed in a first device;
assigning a tag name to at least one of a variable to be referred to by a second device and a variable to which a value is to be set by a second device, among variables used in the program;
creating a corresponding table in which a variable name and the tag name correspond with each other;
converting a tag object including the tag name to a format that can be interpreted by the second device and transferring the format to the second device; and
converting the tag name to the variable name by using the corresponding table when the second device accesses the first device.
According to this method, since double engineering does not need to be carried out, a correction is not forgotten.

In the interactive data access method, the format that can be interpreted by the second device is the same format as that of an interface when the second device accesses a third device. Accordingly, the same interface as an access to the other device can be employed.

In the interactive data access method, the first device generates a copy of the variable to which the tagname is assigned, and
when the second device requests the first device read out of the variable, the first device returns the value of the requested variable by referring to the copy.
Accordingly, the read out at high speed is possible.

In the interactive data access method, the first device updates the copy in a prescribed cycle. Therefore, old data does not need to be read out.

In the interactive data access method, the tag object includes attribute data of the variable. Therefore, a precise corresponding table can be created.

The present invention provides an interactive data access system having a plurality of devices, in which the plurality of devices connected via a network interactively accesses so as to set values to variables and read the values of the variables, the interactive data access system comprising:
an engineering device for creating a program to be performed in a first device, assigning a tag name to at least one of a variable to be referred to by a second device and a variable to which a value is to be set by a second device, among variables used in the program, and creating a corresponding table in which a variable name and the tag name correspond with each other;
the first device to which the corresponding table and the program are inputted, and which executes the program, and when the second device accesses the specific device, converts the tag name to the variable name by using the corresponding table; and
a converter to which a tag object including the tag name is inputted, and which converts the tag object to a tag list that can be interpreted by the second device, and transfers the tag list to the second device.
According to this system, since double engineering does not need to be carried out, a correction is not forgotten.

In the interactive data access system, a format that can be interpreted by the second device is the same format as that of an interface when the second device accesses a third device. Accordingly, the same interface as an access to the other device can be employed.

In the interactive data access system, the first device has a copy storing section in which a copy of the variable to which the tag name is assigned is stored, and
when the second device requests read out of the variable, the first device returns the value of the requested variable by referring to the copy stored in the copy storing section. Accordingly, the read out at high speed is possible.

In the interactive data access system, the first device updates the copy stored in the copy storing section in a prescribed cycle. Therefore, old data does not need to be used.

In the interactive data access system, the tag object includes attribute data of the variable. Therefore, a precise corresponding table can be created.

In the interactive data access system, the converter is an engineering device for creating a program to be executed by the second device. Therefore, existing hardware can be used. Advantages of the Invention

According to the interactive data access method and the interactive data access system of the plurality of devices, the tag name is assigned to the variable to be used by the other device, the corresponding table of the tag names and the variable names is created, the tag object is converted to the format that can be interpreted by the other device and transferred to the other device, and when the other device makes an access by designating the tag name, the tag name is converted to the variable name by using the corresponding table.

Since attributes related to the variable and the tag are defined by one engineering device, double engineering in which definition is made by two or more engineering devices does not need to be carried out. Further, since the double engineering is not carried out, a trouble can be prevented that the variable of only one side is corrected and the correction of the other side is forgotten.

Further, since the other device can make an access by using the tag name, the same tag interface as a human interface, etc., connected to that device can be employed. Thus, a standardized operation, monitor and control can be carried out.

Further, since the gateway does not need to be used, the performance of data access is improved and a larger quantity of data access is possible than before. Therefore, the structure of the system is simplified and traffic of a communication bus can be reduced.

Further, by generating the copy of the variable, a read out operation from the other device can be carried out at high speed.

### Brief Description of the Drawings

[Fig. 1] is a block diagram showing an interactive data access system according to one embodiment of the present invention.
[Fig. 2] is a block diagram showing the interactive data access system according to one embodiment of the present invention.
[Fig. 3] is a block diagram showing an operation of the interactive data access system according to one embodiment of the present invention.
[Fig. 4] is a block diagram showing an operation of the interactive data access system according to one embodiment of the present invention.
[Fig. 5] is a block diagram showing an operation of the interactive data access system according to one embodiment of the present invention.
[Fig. 6] is a block diagram showing an operation of the interactive data access system according to one embodiment of the present invention.
[Fig. 7] is a block diagram of a system in which a safety system and a production control system are connected together. Description of Reference Numerals and Signs

- 11: safety engineering device
- 12: safety controller
- 21: production engineering device
- 22: production human interface
- 23: production controller
- 31: Ethernet
- 32: production control communication bus
- 13: tag object
- 14: TIC
- 15: trans-table
- 24: tag list
- 61: control task
- 62: conversion task
- 63: communication task
- 65: copy of variable value

### Best Mode for Carrying Out the Invention

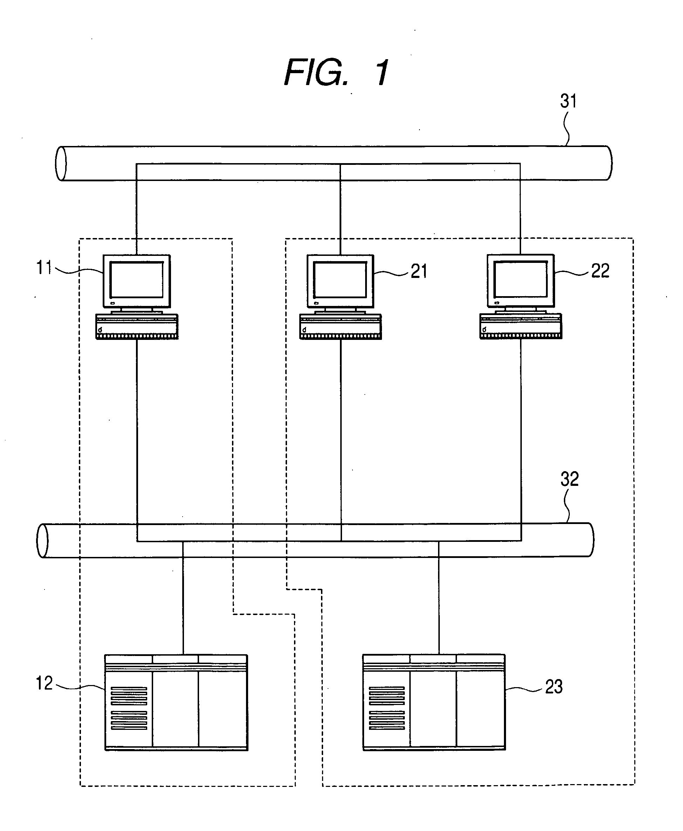

Now, one embodiment of an interactive data access system according to the present invention will be described below in detail. Fig. 1 is a block diagram of the interactive data access system having a plurality of devices according to one embodiment of the present invention. In this embodiment, a safety system and a production control system are directly connected so as to form one system.

In Fig. 1, a safety engineering device 11 is connected to an Ethernet (registered trademark) 31 and a production control communication bus 32. A safety controller 12 is connected to the production control communication bus 32. The safety engineering device 11 and the safety controller 12 are the same as the safety engineering device 91 and the safety controller 92 in the safety system 9 shown in Fig. 7. The safety engineering device 11 is a device for performing engineering of the safety controller 12.

A production engineering device 21 is connected to the Ethernet (registered trademark) 31 and the production control communication bus 32. A production human interface 22 is connected to the Ethernet 31 and the production control communication bus 32. A production controller 23 is connected to the production control communication bus 32. The production engineering device 21 is a device for performing engineering of the production controller 23, and the production human interface 22 is a man machine interface of the production controller. 23.

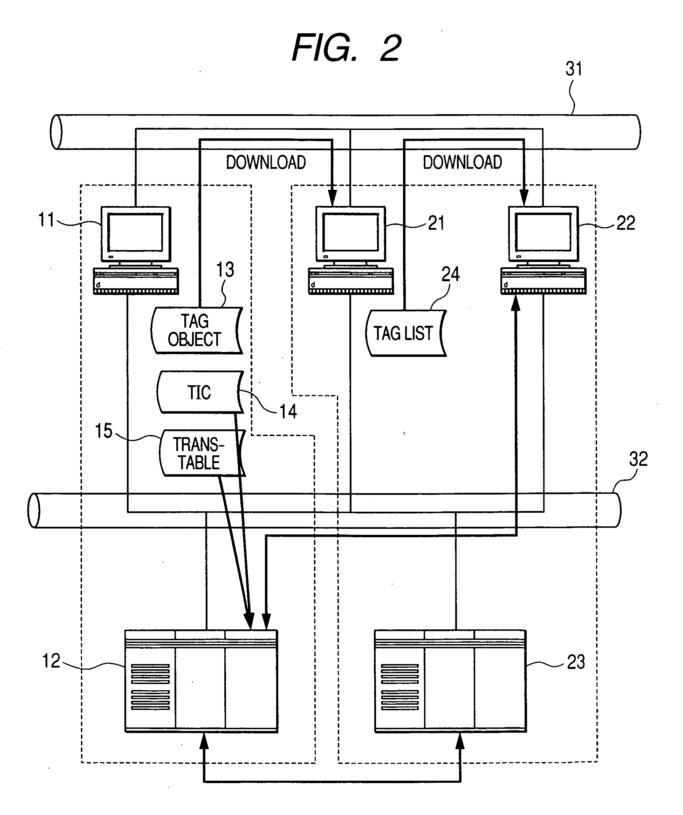

Now, an operation of this system will be described by referring to Fig. 2. Components that are the same as those of Fig. 1 are designated by the same reference numerals and an explanation thereof will be omitted. In Fig. 2, a tag object 13 is created by the safety engineering device 11.

The safety engineering device 11 creates a program to be executed by the safety controller 12, which is described in a Function Block or a Ladder based on IEC61131-3.

Then, a tag is assigned to a variable to be referred to or a variable to which a value is to be set by the production human interface 22 and/or the production controller 23, among variables used in the program. Then, attribute data of the tag is defined. The tag object 13 is obtained by integrating the tag and the attribute data and converting them to a format that can be interpreted by the production engineering device 21. The tag object 13 is downloaded to the production engineering device 21 via the Ethernet (registered trademark) 31.

A TIC (Target Independent Code) 14 is created by the safety engineering device 11, and described in a format that can be interpreted and executed by the safety controller 12. The TIC 14 includes the program described in the Function Block or the Ladder. The TIC 14 is downloaded to the safety controller 12 via the production control communication bus 32.

A trans-table 15 is created by the safety engineering device 11. The trans-table 15 is a corresponding table of the variable names and the tag names, and described in a format that can be interpreted by the safety controller 12.

A tag list 24 is created from the tag- object 13 by the production engineering device 24 using a tag list creating function. The tag list 24 is in a format that is interpreted by the production human interface 22, and is described in the same file format as that of an interface when the production human interface 22 accesses the production controller 23. Accordingly, the production human interface 22 can access the safety controller 12 and the production controller 23 without distinguishing them.

The tag list 24 is downloaded to the production human interface 22 via the Ethernet (registered trademark) 31. The production engineering device 21 merely converts the tag obj ect 13 to the file format that can be interpreted by the production human interface 22, and does not define new data.

When the production controller 23 accesses the safety controller 12, the safety controller 12 converts a transmitted tag name to the variable name by using the trans-table 15.

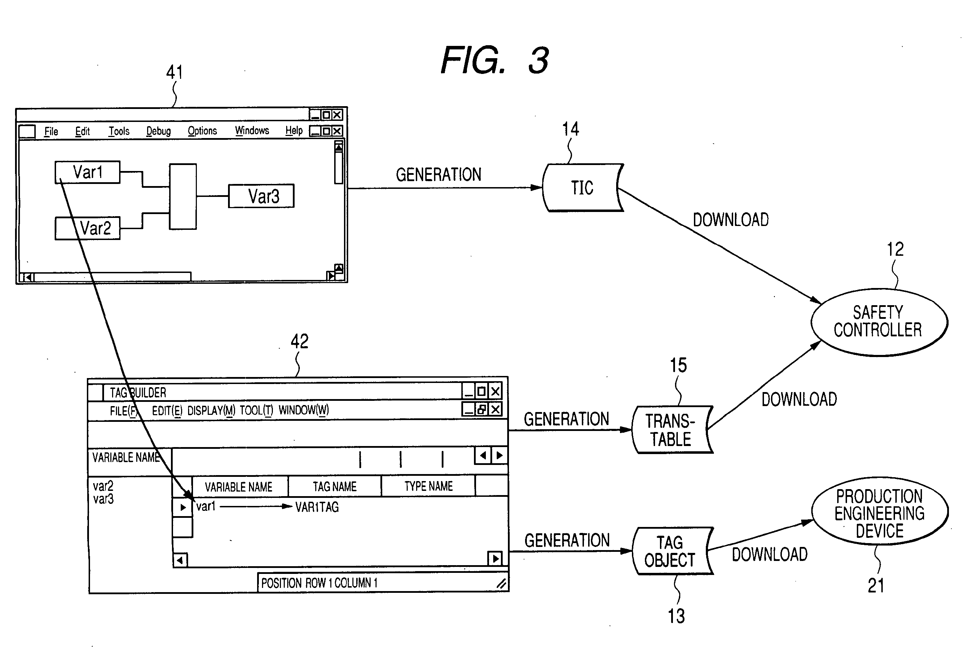

Fig. 3 schematically shows the relation of Fig. 2. The same components as those of Fig. 2 are designated by the same reference numerals and an explanation thereof will be omitted. In Fig. 3, a builder 41 is employed in the safety engineering device 11. The program that operates in the safety controller 12 is created by using the builder 41. The TIC 14 is created from the program by generation and downloaded to the safety controller 12.

A tag builder 42 is used in the safety engineering device 11. Among the variables defined by the builder 41, the tag name is assigned to the variable to be referred to or the variable to which the value is to be set by the production controller 23, by using the tag builder 42. In Fig. 3, the tag name of VAR1TAG is assigned to the variable var1.

When the tag names are completely assigned to all the variables to be referred to by the production controller 23 or the like, the trans-table 15 and the tag object 13 are created by generation. The trans-table 15 is downloaded to the safety controller 12 and the tag object 13 is downloaded to the production engineering device 21.

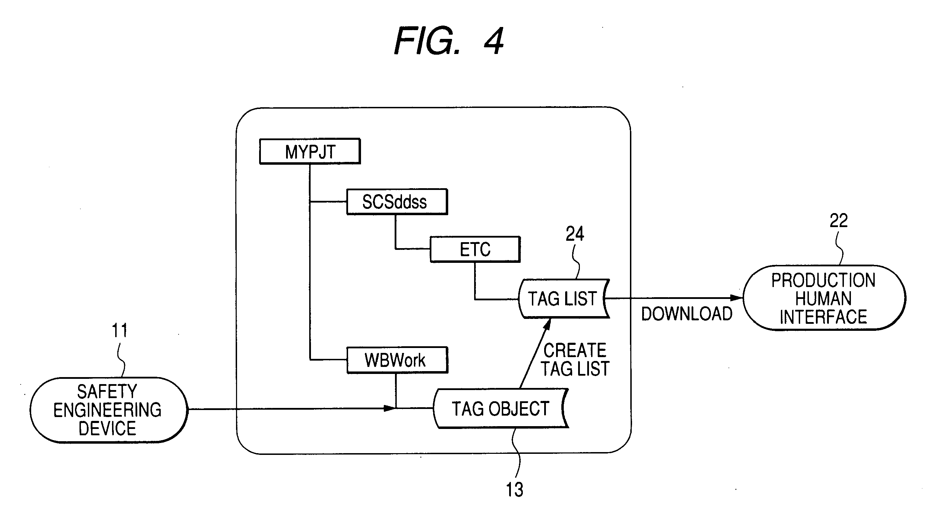

Fig. 4 shows a structure of a folder of a project database for the production controller 23 that is managed by the production engineering device 21. The same components as those of Fig. 2 are designated by the same reference numerals and an explanation thereof will be omitted. In Fig. 4, a folder SCSddss and a folder WBWork are created below a folder MYPJT. The folder SCSddss is a folder for the safety controller 12 and-ddss represents an address on the production control communication bus 32.

The tag object 13 is downloaded to the folder WBWork from the safety engineering device 11. The tag list 24 is created from the tag object 13 by using the tag list creating function, and stored in a folder ETC, and then, downloaded to the production human interface 22. As described above, in a process of creating the tag list 24 from the tag list 13, there is no data that is newly created.

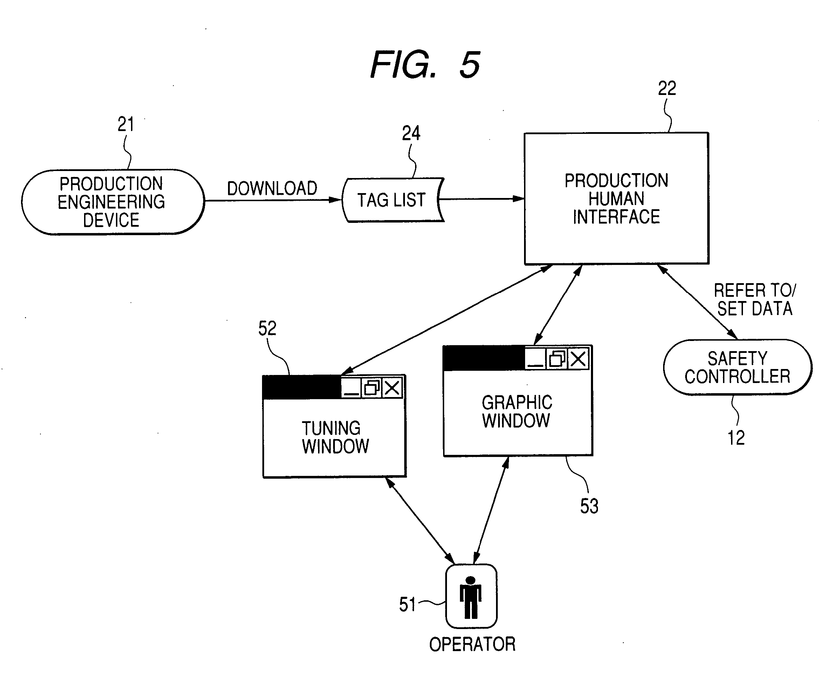

Fig. 5 shows an operation with the production human interface 22 as a main part. The same components as those of Fig. 2 are designated by the same reference numerals and an explanation thereof will be omitted. In Fig. 5, the tag list 24 is downloaded to the production human interface 22 from the production engineering device 21. An operator 51 refers to/sets the data of the safety controller 12 by using a tuning window 52 or a graphic window 53.

The production human interface 22 accesses the safety controller 12 by employing the tag list 24. Since the tag list 24 is created to be the same as the interface when the production human interface 22 accesses the production controller 23, the production human interface 22 can access the production controller 23 and the safety controller 12 without distinguishing them.

Namely, the communication interface can be made to be the same in referring to/setting the data of the safety controller 12 and in referring to/setting the data of the production controller 23. Further, also in a user interface of the tuning window 52 or the graphic window 53, the data of the safety controller 12 and the data of the production controller 23 can be employed without distinguishing them.

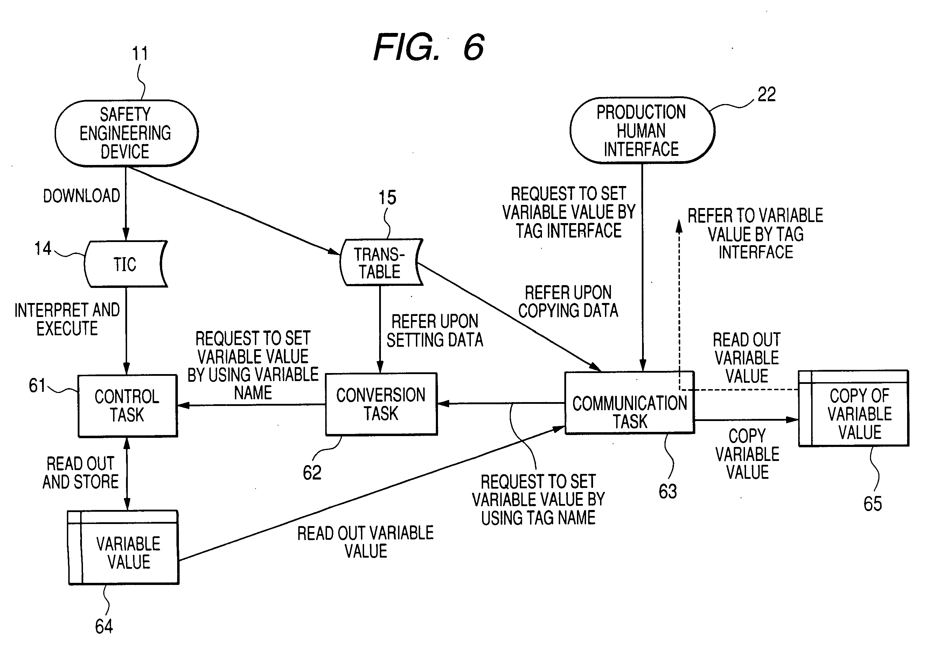

An operation of the safety controller 22 is shown in Fig. 6. The same components as those of Fig. 2 are designated by the same reference numerals and an explanation thereof will be omitted. In Fig. 6, the TIC 14 and the trans-table 15 are downloaded to the safety controller 12 from the safety engineering device 11.

Acontrol task 61 reads and executes the TIC 14 in a prescribed cycle. At this time, the control task 61 stores a value in a variable value 64 and reads out the value. An access from the production human interface 22 and the production controller 23 which is not shown is transmitted via a communication task 63.

The communication task 63 generates a copy 65 of the variable value so as to respond to a request from the production human interface 22 and the production controller 23. The copy 65 is created in a format such that the tag name and the variable name make a pair, and in a format such that a high-speed response to the request from the production human interface 22 and the production controller 23 is available.

The communication task 63 generates the copy 65 in a prescribed cycle (for instance, one second) . In order to store the tag name and the variable value in a pair, the communication task 63 needs to know the corresponding relation between the tag name and the variable value. Therefore, the communication task 63 refers to the trans-table 15 to obtain the corresponding relation and generates the copy 65. When there is a request to refer to the variable from the production human interface 22 and the production controller 23, the communication task 63 refers to the copy 65 and returns the variable value.

A conversion task 62 converts the variable name and the tag name mutually, and refers to the trans-table 15 at the time of setting data so as to update the conversion task itself. When there is a request to set the variable value by designating the tag name, from the production human interface 22, the communication task 63 sends the tag name to the conversion task 62. The conversion task 62 converts the tag name to the variable name, and sends the variable name and a setting value to the control task 61. The control task 61 rewrites the variable value 64 under a state that does not give an influence to the execution of the TIC 14, that is, under a state that a scanning is not carried out.

In the above-described embodiment, the system in which the safety system and the production control system are connected together is explained, however, the present invention is not limited thereto. The present invention may be applied to a system including a plurality of controllers (devices) that cannot directly access internal variables.

## Claims

1. An interactive data access method of a plurality of devices, in which the plurality of devices connected via a network interactively accesses so as to set values to variables and read the values of the variables, the interactive data access method comprising:
creating a program to be performed in a first device;
assigning a tag name to at least one of a variable to be referred to by a second device and a variable to which a value is to be set by a second device, among variables used in the program;
creating a corresponding table in which a variable name and the tag name correspond with each other;
converting a tag object including the tag name to a format that can be interpreted by the second device and transferring the format to the second device; and
converting the tag name to the variable name by using the corresponding table when the second device accesses the first device.

2. The interactive data access method according to claim 1, wherein the format that can be interpreted by the second device is the same format as that of an interface when the second device accesses a third device.

3. The interactive data access method according to claim 1, wherein the first device generates a copy of the variable to which the tag name is assigned, and
when the second device requests the first device read out of the variable, the first device returns the value of the requested variable by referring to the copy.

4. The interactive data access method according to claim 3, wherein the first device updates the copy in a prescribed cycle.

5. The interactive data access method according to claim 1, wherein the tag object includes attribute data of the variable.

6. An interactive data access system having a plurality of devices, in which the plurality of devices connected via a network interactively accesses so as to set values to variables and read the values of the variables, the interactive data access system comprising:
an engineering device for creating a program to be performed in a first device, assigning a tag name to at least one of a variable to be referred to by a second device and a variable to which a value is to be set by a second device, among variables used in the program, and creating a corresponding table in which a variable name and the tag name correspond with each other;
the first device to which the corresponding table and the program are inputted, and which executes the program, and when the second device accesses the specific device, converts the tag name to the variable name by using the corresponding table; and
a converter to which a tag object including the tag name is inputted, and which converts the tag object to a tag list that can be interpreted by the second device, and transfers the tag list to the second device.

7. The interactive data access system according to claim 6, wherein a format that can be interpreted by the second device is the same format as that of an interface when the second device accesses a third-device.

8. The interactive data access system according to claim 6, wherein the first device has a copy storing section in which a copy of the variable to which the tag name is assigned is stored, and
when the second device requests read out of the variable, the first device returns the value of the requested variable by referring to the copy stored in the copy storing section.

9. The interactive data access system according to claim 8, wherein the first device updates the copy stored in the copy storing section in a prescribed cycle.

10. The interactive data access system according to claim 6, wherein the tag object includes attribute data of the variable.

11. The interactive data access system according to claim 6, wherein the converter is an engineering device for creating a program to be executed by the second device.
